# EUROPEAN PATENT SPECIFICATION

(11) **EP 3 965 389 B1**
(45) Date of publication and mention of the grant of the patent: **27.07.2022**
(21) Application number: 20194947.6
(22) Date of filing: 08.09.2020
(51) Int. Cl.: H04L 65/1016, H04L 65/10, H04L 65/1069, H04L 65/60, H04L 65/102

(54) **METHOD OF ADAPTIVE TRANSCODING OPTIMIZATION FOR MULTIMEDIA COMMUNICATION AND COMMUNICATION SYSTEM**
VERFAHREN ZUR ADAPTIVEN TRANSCODIERUNGSOPTIMIERUNG FÜR MULTIMEDIAKOMMUNIKATION UND KOMMUNIKATIONSSYSTEM
PROCÉDÉ D'OPTIMISATION DE TRANSCODAGE ADAPTATIF POUR COMMUNICATIONS MULTIMÉDIA ET SYSTÈME DE COMMUNICATION

(43) Date of publication of application: 09.03.2022
(73) Proprietor: Deutsche Telekom AG, 53113 Bonn (DE)
(72) Inventor: JERBI, Walid, 53639 Königswinter (DE); SCHMIDT, Holger, 41844 Wegberg (DE)
(74) Representative: Vossius & Partner Patentanwälte Rechtsanwälte mbB

(56) References cited:
- US-A1- 2013 232 273
- US-A1- 2019 166 165
- Liviu Ciulei ET AL: "NEXES IMS Architecture", , 30 September 2017 (2017-09-30), XP055766788, DOI: Ref. Ares(2017)4775177 Retrieved from the Internet: URL:https://ec.europa.eu/research/particip ants/documents/downloadPublic?documentIds= 080166e5b5735d63&appId=PPGMS [retrieved on 2021-01-19]
- "Gateway control protocol: Version 3; H.248.1 (03/13)", ITU-T STANDARD, INTERNATIONAL TELECOMMUNICATION UNION, GENEVA ; CH, no. H.248.1 (03/13), 16 March 2013 (2013-03-16), pages 1-242, XP017578395, [retrieved on 2013-10-01]
- "3rd Generation Partnership Project; Technical Specification Group Core Network and Terminals; IMS Application Level Gateway (IMS-ALG) - IMS Access Gateway (IMS-AGW); Iq Interface; Stage 3 (Release 16)", 3GPP STANDARD; TECHNICAL SPECIFICATION; 3GPP TS 29.334, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. V16.1.0 20 December 2019 (2019-12-20), pages 1-117, XP051840865, Retrieved from the Internet: URL:ftp://ftp.3gpp.org/Specs/archive/29_se ries/29.334/29334-g10.zip 29334-g10.docx [retrieved on 2019-12-20]

## Description

### Field of the invention

This invention relates to a method of adaptive transcoding optimization for multimedia communication and to a communication system.

### Background

Transcoding is a direct digital-to-digital conversion of encoding and decoding multimedia streams to match media-endpoint-device capabilities. Transcoding is required when there are no supported codecs in common in the lists of two multimedia devices. Typically, transcoding is facilitated through Digital Signal Processors (DSPs) but it may also be carried by normal compute resources. Either way, transcoding is an expensive matter as it consumes lots of resources.

Some codecs are even much more resource-consuming than others like the Enhanced Voice Services (EVS) codecs (up to a factor of ten times more than transcoding between other voice codecs like G711 or G722.2) and OPUS codecs.

As of today, entities which control the media in the network, such as a Session Border Controller SBC (in 3GPP IP Multimedia Subsystem (IMS) vocabulary: Proxy Call Session Control Function (P-CSCF) or Interconnect Border Control Function (IBCF) for instructing a Border Gateway Function (BGF)) know what are the codecs supported by the multimedia telephony devices and usually enrich the list of codecs to offer a broader choice to another party.

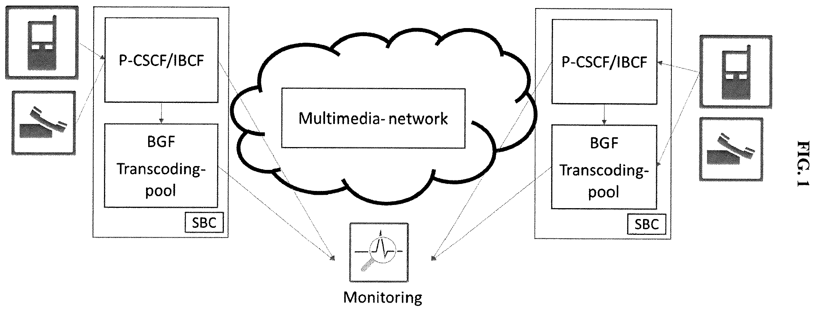

FIG. 1 illustrates a high-level architecture for transcoding according to the prior art. In detail, FIG. 1 illustrates a system comprising a device A and B, both devices connected to a respective SBC which connects both devices through a data network, such as a multimedia-network. The SBC comprises a P-CSCF/IBCF and a BGF Transcoding-pool. In FIG. 1, if the device B picks a codec from the codecs added by the SBC and not supported by the device A, the SBC starts transcoding.

Performance counters for current transcoded sessions and the ratio to the maximum supported transcoding are usually available for monitoring and alarming purposes. Since the allocated resources are based on a traffic model, the alarms are used as a trigger to buy/allocate more resources.

The following Table 1 lists some of the possible codec combinations and how many transcoded calls are possible with a same 16 virtual central processing unit (16vCPU).

**Table 1**

| **Codec A** | **Codec B** | **Transcoding Capacity** - **16vCPU** |
|---|---|---|
| AMR-NB | OPUS | 440 |
| OPUS | G722 | 459 |
| EVS | G.711 | 360 |
| EVS | G.722 | 360 |
| G711U | OPUS | 502 |
| G711A | OPUS | 502 |
| AMR-WB | OPUS | 602 |
| AMR-WB | G.729 | 613 |
| G711U | AMR-WB | 837 |
| G711A | AMR-WB | 837 |
| AMR-WB | G722 | 837 |
| AMR-NB | AMR-WB | 872 |
| G.729 | 711U | 1120 |
| G.729 | 711A | 1120 |
| AMR-NB | G722 | 1130 |
| AMR-NB | G.729 | 1240 |
| G711U | AMR-NB | 1946 |
| G711A | AMR | 1946 |
| AMR-NB | G711 A-law | 1946 |
| G711U | G722 | 2239 |
| G711A | G722 | 2239 |

US 2013/232273 A1 relates to a method for selecting a codec for use by a communications device for a session over a network, having a transcoding resource. Further, it relates to determining whether the transcoding resource is available for the communications session and, if the transcoding resource is available, a subset of codecs available to the communications device is used in a signalling process used to determine a codec for the session. The subset is selected based on an operative condition affecting the communications device. Liviu Ciulei et al: "NEXES IMS Architecture", XP055766788 relates to next generation emergency services and IMS architectures. Gateway control protocol: Version 3, H.248.1 (03/13), ITU-T Standard, pages 1-242, XP017578395, relates to the standard for Gateway control protocol.

### Technical problem

If all transcoding resources are being used, a new call(s), where transcoding is needed, can either not get established at all (call set up phase) or is dropped (if the need for transcoding is during a call like in a single radio voice call continuity SRVCC scenarios, where a device moves from LTE-Coverage to CS legacy).

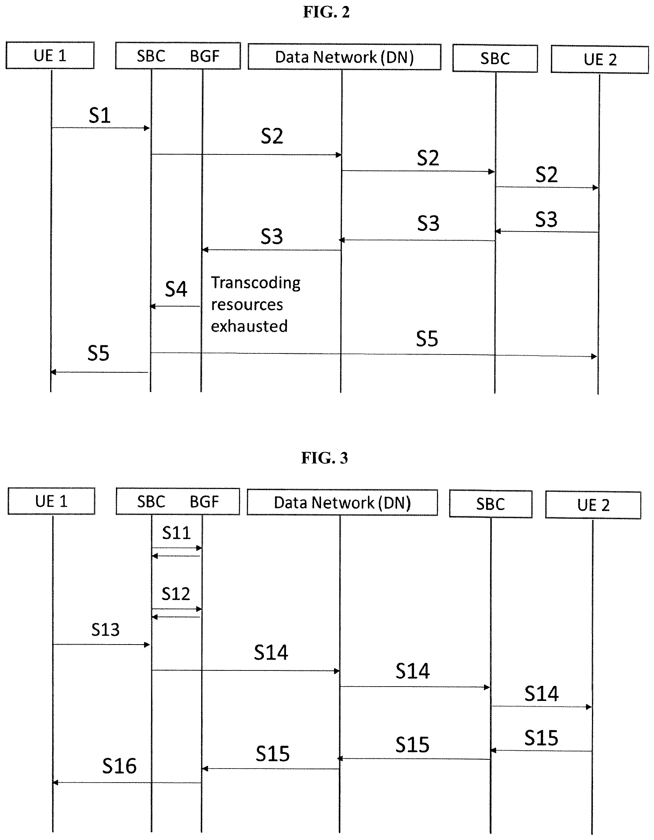

In the current existing systems, there is no dynamic algorithm in use to adapt the transcoding usage. That leads to the situation that only well dimensioned or overprovisioned networks (based on the traffic in peak situations) work without problems, which is a very expensive and not efficient situation. On top of the costs and inefficiency problems, calls will be dropped or cannot be setup if the transcoding resources are exhausted as depicted in FIG.2. This degrades the customer user experience.

FIG. 2 illustrates an exemplary flow chart of today's situation, where a call is dropped with a non-optimized transcoding algorithm.

In FIG.2, the UE 1 makes (S1) a Session Description Protocol (SDP) offer to its associated Session Border Controller (SBC) comprising a set of codecs, e.g. codecs 1 and 2. Most of the time the SBC comprises many logical functions. The BGF is sometimes belonging to the SBC, but, in some other implementations, the BGF may be implemented as an independent box. In all cases there will be an interaction between the product SBC (which comprises logical functions like P-CSCF, IBCF...) and the logical function BGF.

Here, at the SBC, if the SBC has the capability to also support further codecs (in the example of FIG. 2, the SBC may support codecs 1, 2, 3 and 4), it adds the further codecs 3 and 4 into the SDP offer and sends (S2) the SDP offer to the UE 2, through the data network, such as a VoIP core network and/or interconnection network, and the SBC associated with the UE 2.

At this point, the UE2 can choose between the received set of offered codecs, i.e. codecs 1, 2, 3 and 4 in this example. According to the example of FIG. 2 it is assumed that the UE2 chooses codec 3, which is a high-quality codec. The UE2 then sends (S3) a SDP answer towards the UE 1 (through the UE2 SBC, the data network, the UE1 associated BGF and SBC) with the chosen third option, i.e. codec 3. However, at the BGF of UE 1, all transcoding resources are exhausted.

The BGF then notifies (S4) the SBC that all transcoding resources are exhausted.

Lastly, the SBC rejects (S5) the call and informs UE 1 and UE2 about the rejection.

It is also worth mentioning that, sending an empty invite to UE2 for first getting the list of the codecs from the UE2 is theoretically possible. However, in currently existing devices and methods, many devices do not support the handling of empty invites (also called late offers, since the codec list offer comes in the response of the UE2). That only leads to even more call setup failures and drops as today.

Notwithstanding the above, some operators cannot afford a provisioning of transcoding resources in order to avoid the above-mentioned situations. Consequently, call drops and missed calls happen, which lead to a bad customer experience and a loss of money for these failed calls.

This invention introduces a new approach which takes the resource consumption situation into account and helps establish the trade-off between offering High Quality codecs like EVS and balances the situation of the computing resources.

An object of the present invention is to address the above-mentioned technical problems, which are achieved according to the invention by taking the resource consumption situation into account and help establishing a trade-off between offering High Quality codecs like EVS and balancing a situation of the computing resources.

Another object of the invention is to optimize best the transcoding usage which is always aware about the used resource situation. This leads to savings when the transcoding resources forecasts are calculated.

Another object of the invention is to reduce the amount of failed calls because of exhausted transcoding resources. This increases customer experience and hence in benchmark KPIs where failed calls play a big role.

### Summary of the invention

The invention is specified by the independent claims.

Preferred embodiments are defined in the dependent claims.

The above object is achieved by the features of the independent claim.

According to a first aspect, the invention provides a method for transcoding in a communication system, the communication system comprising: a first user equipment, UE1, a first Session Border Controller, SBC-1, associated with UE1, a Border Gateway Function BGF-1, a data network, DN, a second user equipment, UE2, and a second Session Border Controller, SBC-2, associated with UE2, wherein the SBC-1 has a transcoding capacity, TC, wherein the TC has a value within one of a plurality of ranges, the method comprising the steps of: subscribing, from the SBC-1 to the BGF-1, to a transcoding capacity event; notifying, from the BGF-1 to the SBC-1, about a current TC; sending, from the UE1 towards the UE2, a Session Description Protocol, SDP, offer, through SBC-1, comprising a first set of codecs; receiving the SDP offer, at the SBC-1, and sending the SDP offer to the UE2 through the DN and SBC-2, the SDP offer sent from the SBC-1 comprising a second set of codecs depending on the current phase TC; receiving, at the UE2, the SDP offer comprising the second set of codecs and selecting a codec; sending, from the UE2 to the UE1, a SDP answer including the selected codec, through SBC-2, the DN, the BGF-1 and the SBC-1; checking, at the SBC-1, whether the UE2 selected codec matches with one of the set of codecs of the SDP offer of the UE1, and, in case it matches, forwarding the SDP answer to the UE1, in the case the UE2 selected codec does not match with one of the codecs of the SDP offer of the UE1, checking, at the SBC-1 whether the selected codec is supported by the BGF-1, and, in the case it is supported, instructing the BGF-1, by the SBC-1, to perform transcoding from the selected codec into a codec from the first set of codecs of the SDP offer, updating the SDP answer, and forwarding the updated SDP answer to the UE1.

Preferably, the TC is: in phase one if LT1 ≤ TC < UT1, where LT1 is a lower threshold and UT1 is a first upper threshold of transcoding capacity, in phase two if UT1 ≤ TC < UT2, where UT2 is a second upper threshold transcoding capacity, phase three if UT2 ≤ TC, wherein LT1, UT1 and UT2 are natural numbers and are configurable parameters.

Preferably, in case the current TC is phase one, before forwarding the SDP offer to the UE2 through the DN and SBC-2, the method further comprises: offering, at the SBC-1, proactive transcoding with all available codecs supported by SBC-1 and adding all the available codecs, which are not already present in the set of codecs, to the first set of codecs of the SDP offer, obtaining the second set of codecs.

Preferably, in case the current TC is phase two, before forwarding the SDP offer to the UE2 through the DN and SBC-2, the method further comprises: offering, at the SBC-1, proactive transcoding only with non-costly available codecs in terms of transcoding capacity, supported by SBC-1 and adding all the non-costly available codecs, which are not already present in the set of codecs, to the first set of codecs of the SDP offer, obtaining the second set of codecs.

Preferably, in case the current TC is phase three, the SBC-1 forwards the SDP offer without offering any proactive transcoding and thus not adding any additional codecs, the second set of codecs thus being identical to the first set of codecs.

Preferably, the method further comprising the steps of: receiving, at the SBC-2, the SDP offer; offering, by the SBC-2, proactive transcoding with all available codecs supported by SBC-2 by adding all the available codecs, which are not already present in the set of codecs, to the SDP offer; and forwarding the SDP offer to the UE2.

Preferably, in case the UE2 does not support any of the codecs provided by the SDP offer, the method further comprises the steps of: rejecting, by the UE2, the SDP offer; sending a SDP answer, from the UE2 to the UE1, through the SBC-2 and the DN, indicating a third set of supported codecs by the UE2; if the SBC-1 has any available TC: updating, by the SBC-1, the SDP offer based on the third set of supported codecs by the UE2; sending, by the SBC-1, a second SDP offer to the UE2, wherein the second SDP offer comprises at least one of the codecs from the third set of supported codecs by the UE2; receiving, by the UE2, the second SDP offer and selecting one of the codecs from the second SDP offer; sending, by the UE2, a second SDP answer to the SBC-1 indicating the selected codec; and performing transcoding, by the SBC-1, from the UE2 selected codec into one of codecs from the first set of codecs, updating the second SDP answer, and sending the updated second SDP answer to the UE1.

According to a second aspect, the invention provides a communication system, the communication system comprising: a first user equipment, UE1, a first Session Border Controller, SBC-1, associated with UE1, a Border Gateway Function BGF-1, a data network, DN, a second user equipment, UE2, and a second Session Border Controller, SBC-2, associated with UE2, wherein the SBC-1 has a transcoding capacity, TC, wherein the TC has a value within one of a plurality of ranges, the method comprising the steps of: the SBC-1 is configured to subscribe, to the BGF-1, to a transcoding capacity event; the BGF-1 is configured to notify to the SBC-1 about a current TC; the UE1 is configured to send to the UE2, a Session Description Protocol, SDP, offer, through SBC-1, comprising a first set of codecs; the SBC-1 is configured to receive the SDP offer from UE1 and forward it to the UE2 through the DN and the SBC-2, the SDP offer sent from the SBC-1 comprising a second set of codecs depending on the current TC; the UE2 is configured to receive the SDP offer comprising the second set of codecs and selecting a codec; the UE2 is configured to send to the UE1, a SDP answer including the selected codec, through the SBC-2, the DN, the BGF-1 and the SBC-1; the BGF-1 is configured to check whether the UE2 selected codec matches with one of the set of codecs of the SDP offer of the UE1, and in case the UE2 selected codec matches, the SBC-1 is configured to forward the SDP answer to the UE1, or in the case the UE2 selected codec does not match, the SBC-1 is configured to check whether the selected codec is supported by the SBC-1, and in the case it is supported, the SBC-1 is configured to: instruct the BGF-1 to transcode the SDP answer from the selected codec into a codec from the first set of codecs of the SDP offer, update the SDP answer, and forward the updated SDP answer to the UE1.

Preferably, the TC is: in phase one if LT1 ≤ TC < UT1, where LT1 is a lower threshold and UT1 is a first upper threshold of transcoding capacity, in phase two if UT1 ≤ TC < UT2, where UT2 is a second upper threshold of transcoding capacity, in phase three if UT2 ≤ TC, wherein LT1, UT1 and UT2 are natural numbers and are configurable parameters.

Preferably, in case the current TC is phase one, before the UE1 forwards the SDP offer to the UE2 through the DN and SBC-2, the SBC-1 is further configured to: offer proactive transcoding with all available codecs supported by SBC-1 by adding all the available codecs, which are not already present in the set of codecs, to the first set of codecs of the SDP offer, obtaining the second set of codecs.

Preferably, in case the current TC is phase two, before the UE1 forwards the SDP offer to the UE2 through the DN and SBC-2, the SBC-1 is further configured to: offer proactive transcoding only with non-costly available codecs in terms of transcoding capacity, supported by SBC-1, by adding all the non-costly available codecs, which are not already present in the set of codecs, to the first set of codecs of the SDP offer, obtaining the second set of codecs.

Preferably, in case the current TC is phase three, the SBC-1 is configured to forward the SDP offer without offering any proactive transcoding nor adding any additional codecs, the second set of codecs thus being identical to the first set of codecs.

Preferably, the SBC-2 is configured to: receive the SDP offer; offer proactive transcoding with all available codecs supported by SBC-2 by adding all the available codecs, which are not already present in the set of codecs, to the SDP offer; and forward the SDP offer to the UE2.

Preferably, in case the UE2 does not support any of the codecs provided by the SDP offer: the UE2 is configured to reject the SDP offer; the UE2 is configured to send a SDP answer to the UE1, through the SBC-2 and the DN, indicating a third set of supported codecs by the UE2; if the SBC-1 has any available TC: the SBC-1 is configured to update the SDP offer based on the third set of supported codecs by the UE2; the SBC-1 is configured a second SDP offer to the UE2, wherein the second SDP offer comprises at least one of the codecs from the third set of supported codecs by the UE2; the UE2 is configured to receive the second SDP offer and to select one of the codecs from the second SDP offer; the UE2 is configured to send a second SDP answer to the SBC-1 indicating the selected codec; and the SBC-1 is configured to: perform transcoding from the UE2 selected codec into one of codecs from the first set of codecs, update the second SDP answer, and forward the updated second SDP answer to the UE1.

Other aspects, features, and advantages will be apparent from the summary above, as well as from the description that follows, including the figures and the claims.

### Brief description of the drawings

In the drawings:
- FIG. 1: illustrates an exemplary high-level architecture for transcoding according to the prior art.
- FIG. 2: illustrates an exemplary flowchart using a non-optimized transcoding algorithm according to the prior art.
- FIG. 3: illustrates a flow chart for subscribing to an event of transcoding capacity when the transcoding usage capacity is in phase one according to an exemplary embodiment of the invention.
- FIG. 4: illustrates a flow chart for adapting a list of codecs and eliminating costly codecs when the transcoding capacity is in phase two according to an exemplary embodiment of the invention.
- FIG. 5: illustrates a flow chart for trying transcoding free when the transcoding capacity is in phase three according to an exemplary embodiment of the invention.
- FIG. 6: illustrates a flow chart when the transcoding usage performance is in phase three according to an exemplary embodiment of the invention.

### Detailed description of the invention

In an embodiment, the invention provides a method for subscribing to a transcoding usage performance counter (in percentage form for simplification) in a communication system. The communication system comprises a first user equipment (UE1), a Session Border Controller (SBC), a Border Gateway Function (BGF), a data network (such as a VoIP core network, interconnection network, etc.) and a second user equipment (UE2) with its Session Border Controller (SBC). The method introduces three phases further referred to as phase one, phase two and phase three.

For the sake of simplification, network elements/functions between SBC-1 and SBC-2 (like S-CSCF, Application Servers...) are not mentioned.

Phase one or first phase is defined as a phase where the transcoding usage performance counter or transcoding capacity (TC) is in the range between a lower threshold 1 (LT1) and a first upper threshold 1 (UT1), LT1 ≤ TC < UT1, where LT1 and UT1 are configurable variables and may be expressed in a form of a percentage. If machine learning platform is available, then theses variables can be even more accurate and tight to operator real traffic data. In phase one, proactive transcoding is offered with all available codecs to help get best quality possible for a user.

Phase two or second phase is defined as a phase where the transcoding usage performance counter or transcoding capacity (TC) exceeds the first upper threshold (UT1) of phase 1, but is below a second upper threshold (UT2), i.e. UT1 ≤ TC < UT2. In this second phase all costly codecs (i.e. in terms of usage of transcoding resources like the EVS-Codec for instance) are eliminated from the proactive transcoding algorithm.

Phase three or third phase is defined as a phase where the transcoding usage performance counter or transcoding capacity (TC) is equal to or exceeds the second upper threshold (UT2). The third phase means that the situation with the transcoding capacity is critical and almost at its limit, and raises an alarm on the monitoring systems. For that the algorithm will not add any additional codec proactively to try to get a transcoding-free session (or transcoding at UE-2/SBC-2 side).

FIG. 3 illustrates a flow chart for subscribing to an event of transcoding usage according to an exemplary embodiment of the invention. FIG. 3 illustrates the case where the TC is in phase one, i.e. LT1 ≤ TC < UT1.

The method starts with the Session Border Controller (SBC) subscribing (S11) to a transcoding resource usage event at the Border Gateway Function (BGF). Once the subscription is successful, the BGF confirms the subscription to the SBC.

The BGF notifies (S12) the SBC about the current transcoding capacity (TC), which is between the above defined range of phase one LT1<TC<UT1. The SBC sends to the BGF an acknowledgment about the reception of said notification.

The UE1 sends (S13) a Session Description Protocol (SDP) offer towards UE2, through the UE1 associated SBC, comprising a set of available codecs. For example, the set of available codecs may comprise codecs 1 and 2.

It may happen that the SBC supports further codecs, i.e. in addition to those included in the SDP offer send by UE1. If that is the case, the SBC, who is aware of the current TC, i.e. that TC is in phase one, the SBC may add the further supported codecs into the SDP offer. For example, only to simplify the description, in this example it is assumed that the SBC adds codecs 3 and 4 to the set of available codecs of the SDP offer send by UE1. Then, the SBC sends (S14) the SDP offer to the UE2, through the data network and the respective SBC of UE2.

The UE2 receives the SDP offer comprising the set of available codecs, i.e. codecs 1, 2, 3 and 4.

Then, the UE2 selects a codec, for example codec 3, from the set of available codecs and sends (S15) a SDP answer to the UE1 including the selected codec, through the UE2 SBC's, the data network and the UE1 BGF/SBC.

Continuing with the example where the SDP answer comprises codec 3, which is not supported by the UE1, the BGF performs transcoding of the SDP answer from codec 3 to one of the codecs supported by the UE1, i.e. codec 1 or 2, and updates the SDP answer accordingly, i.e. in one of the codecs supported by the UE1.

Finally, the SBC forwards (S16) the updated SDP answer to the UE1.

At some point, however, the TC increase and be equal or higher than the upper threshold of phase one, but below a second upper threshold, i.e. UT1 ≤ TC < UT2. In this case, the second phase is applied.

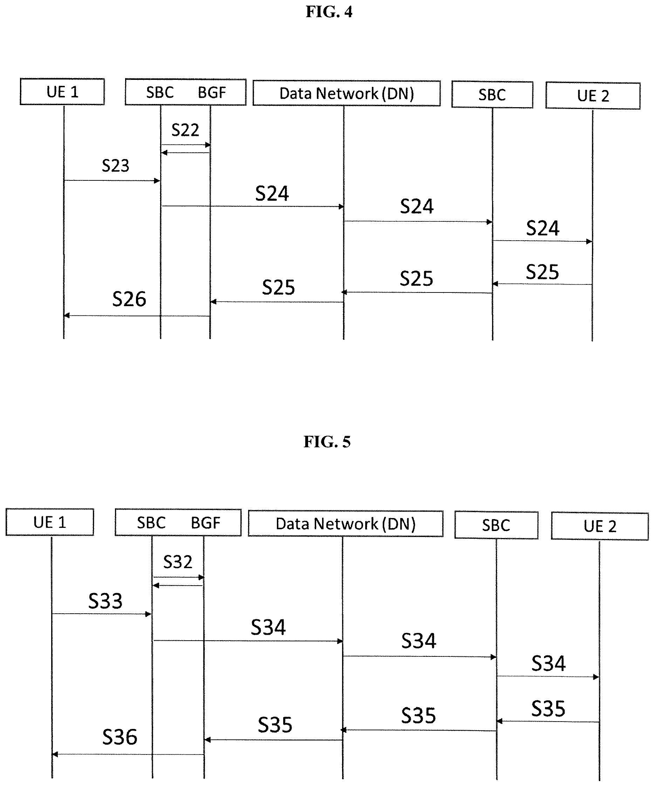

As above-mentioned, in this second phase all costly codecs (i.e. in terms of usage of transcoding resources like the EVS-Codec for instance) are eliminated from the proactive transcoding process. This situation is illustrated in FIG. 4.

FIG. 4 assumes that the Session Border Controller (SBC) is already subscribed (i.e. step S11 of FIG. 3 is the same, although not shown) to a transcoding resource usage event at the Border Gateway Function (BGF).

In FIG. 4, the BGF notifies (S22) the SBC about the current transcoding capacity (TC). However, the notified current TC is between UT1 ≤ TC < UT2, i.e. it is in phase two. The SBC sends to the BGF an acknowledgment about the reception of said notification.

The UE1 sends (S23) a Session Description Protocol (SDP) offer comprising a set of available codecs. To simply the description, this step is the same as step S13 of FIG. 3 where the set of supported codecs by UE1 comprises codecs 1 and 2.

Following the example of FIG. 3, the SBC supports further codecs, i.e. in addition to those included in the SDP offer send by UE1, namely codecs 3 and 4. However, codec 3 is a costly codec in terms of usage of transcoding resources.

If that is the case, since the SBC is aware that TC is in phase two, the SBC may only add (S24) codec 4 into the set of available codecs of the SDP offer send by UE1, because codec 3 is regarded as a costly codec and thus, not added.

Then, the SBC sends (S24) the SDP offer to the UE2, through the data network and the respective SBC of UE2.

The UE2 receives the SDP offer comprising the set of available codecs, i.e. codecs 1, 2 and 4. Then, the UE2 selects a codec from the set of available codecs, i.e. codec 4, and sends (S25) a SDP answer to the BGF, through the associated UE 2 SBC, the data network and the SBC/BGF associated with UE1.

In this case, the SDP answer comprises the selected codec 4. Since the selected codec is not supported by the UE1, the BGF associated with UE1 performs transcoding from codec 4 to one of the codecs supported by UE1, i.e. codec 1 or codec 2, and updates the SDP answer accordingly, i.e. in one of the codecs supported by the UE1.

Finally, the SBC forwards (S26) the updated SDP answer to the UE1.

At some point however, the TC may equal or exceed the second upper threshold of phase two, UT2 ≤ TC. In this case, the third phase is applied. For that the algorithm will not add any additional codec proactively to try to get a transcoding-free session (or leave the task of transcoding to SBC-2 if configured accordingly).

This situation is illustrated in FIG. 5.

FIG. 5 assumes that the Session Border Controller (SBC) is already subscribed (i.e. step S11 of FIG. 3 is the same, although not shown) to a transcoding resource usage event at the Border Gateway Function (BGF).

In FIG. 5, the BGF notifies (S32) the SBC about the current transcoding capacity TC. However, the notified current TC is above UT2, i.e. it is in phase three. The SBC sends to the BGF an acknowledgment about the reception of said notification.

The UE1 sends (S33) a Session Description Protocol (SDP) offer comprising a set of available codecs. To simply the description, this step is the same as step S13 of FIG. 3 where the set of supported codecs by UE1 comprises codecs 1 and 2.

Following the example of FIGs. 3 and 4, the SBC supports further codecs, i.e. in addition to those included in the SDP offer send by UE1, namely codecs 3 and 4. However, since the current TC is in phase three, the SBC does not add any additional codec into the SDP offer, regardless these additional codecs are expensive ones or not.

Thus, the SBC sends (S34) the SDP offer, without any additional codec, to the UE2, through the data network and the respective SBC of UE2.

The UE2 receives the SDP offer comprising the set of supported codecs by UE1, i.e. codecs 1 and 2. Then, the UE2 selects a codec from the set of available codecs, and sends (S35) a SDP answer to the BGF, through the associated UE2 SBC, the data network and the SBC/BGF associated with UE1.

Since the selected codec is supported by the UE1, the BGF associated with UE1 does not need to perform transcoding of the SDP answer and the SBC directly forwards (S36) the SDP answer to the UE1.

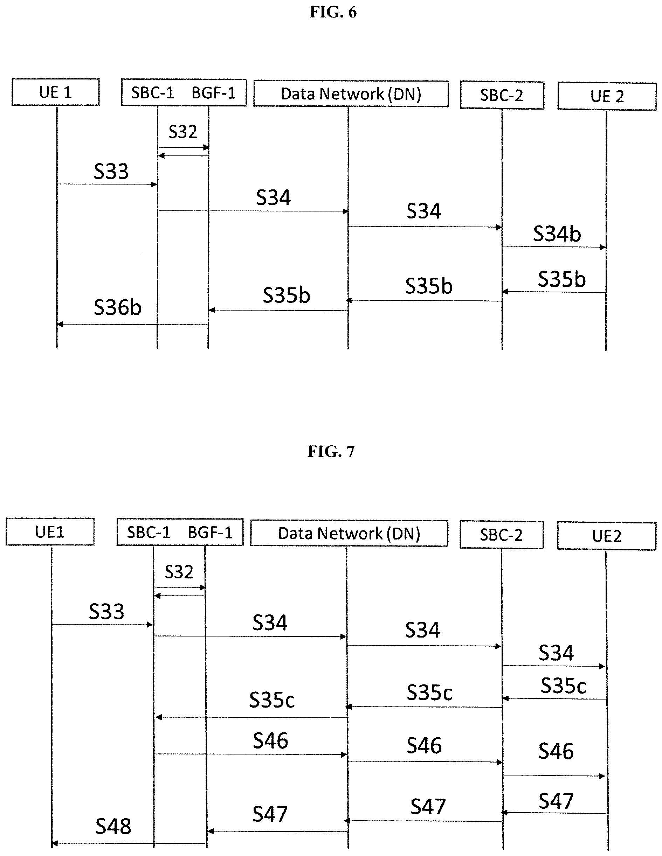

FIG. 6 illustrates an optional alternative of the example shown in FIG. 5. In FIG. 6, the transcoding capacity (TC) is also assumed to be in phase three.

All the initial steps S11, S32, S33 and S34 of FIGs. 3 and 5, respectively, are assumed to be the same in FIG. 6. Thus, the SBC sends (S34) the SDP offer, without any additional codec, to the UE2, through the data network and the respective SBC-2 of UE2.

However, when the SDP is received at the SBC-2, the SBC-2 may actively take the burden of transcoding if SBC-2 allows to do so, i.e. it supports additional codecs than the ones of the received SDP offer and it has available transcoding capacity.

Thus, SBC-2 may add additional codecs to the SDP offer and then send (S34b) the SDP offer to UE2. The SDP offer send by the SBC-2 may thus comprise, for example, codecs 1, 2, 3 and 4, where codecs 3 and 4 have been added by SBC-2.

The UE2 receives the SDP offer comprising the set of supported codecs by SBC-2. Then, the UE2 selects a codec from the set of available codecs, and sends (S35b) a SDP answer to the UE1 through SBC-2.

At the SBC-2, if the selected codec is one of the codecs that require transcoding, i.e. codec 3 or 4, the SBC-2 performs transcoding from the selected codec by the UE2 into one of the codecs supported by UE1, and updates the SDP answer accordingly, i.e. in one of the codecs supported by the UE1. The SBC-2 forwards (S35b) the updated SDP answer to UE1, through the data network and the SBC-1/BGF-1 associated with UE1.

Since the selected codec is supported by the UE1, the BGF associated with UE1 does not need to perform any further transcoding of the updated SDP answer and SBC-1 directly forwards (S36b) this updated SDP answer to the UE1.

FIG. 7 illustrates an optional alternative of the example shown in FIG. 5 and FIG. 6. In FIG. 7, the transcoding capacity (TC) is also assumed to be in phase three.

All the initial steps S11, S32, S33 and S34 of FIG. 3 and FIG. 5, respectively, are assumed to be the same in FIG. 7. Thus, the SBC sends (S34) the SDP offer, without any additional codec, to the UE2, through the data network and the respective SBC-2 of UE2.

This case differs from the example of FIG. 6 in that the SBC-2 associated with UE2 does not intervene, i.e. it does not add any additional codecs to the SDP offer. Further, in FIG. 7, the configuration at the UE2 differs from the above examples, in that it does not support any of the codecs provided by the SDP offer, i.e. codec 1 and codec 2.

In the above-mentioned situation, the UE2 may reject the SDP offer and send a SDP answer to the SDP-1 of UE1, through the SBC-2 and the data network, indicating a set of supported codecs by the UE2, i.e. codecs 3 and 4.

Based on the set of codecs of the SDP answer, the SBC-1 may update the SDP offer, i.e. in order to save the communication, call or the like between UE1 and UE2, and add one of the codecs supported by UE2 into the SDP offer. Needless to say, the SBC-1 may only update the SDP offer if it has the capacity to do so even if the current transcoding capacity is in phase three. Thus, this is an extraordinary measure in order to save the communication, call or the like between UE1 and UE2.

The SBC-1 then sends (S46) a second SDP offer, wherein the second SDP offer comprises at least one of the codecs from the previously received SDP answer from UE2.

The UE2 receives the second SDP offer and accepts/selects one of the codecs from the second SDP offer. The UE2 sends (S47) a SDP answer to SBC-1 indicating the selected codec.

Upon reception of the SDP answer from UE2, the SBC-1 instructs the BGF-1 to: perform transcoding from the UE2's selected codec into one of the codecs supported by UE1, update the SDP answer accordingly, i.e. in one of the codecs supported by the UE1. Finally, the BGF-1 forwards the transcoded SDP answer to UE1.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for transcoding in a communication system, the communication system comprising: a first user equipment, UE1, a first Session Border Controller, SBC-1, associated with UE1, a Border Gateway Function BGF-1, a data network, DN, a second user equipment, UE2, and a second Session Border Controller, SBC-2, associated with UE2, wherein the SBC-1 has a transcoding capacity, TC, wherein the TC has a value within one of a plurality of ranges, the method comprising the steps of:
subscribing (S11), from the SBC-1 to the BGF-1, to a transcoding capacity event;
notifying (S12, S22, S32), from the BGF-1 to the SBC-1, about a current TC;
sending (S13, S23, S33), from the UE1 towards the UE2, a Session Description Protocol, SDP, offer, through SBC-1, comprising a first set of codecs;
receiving the SDP offer, at the SBC-1, and sending (S14, S24, S25) the SDP offer to the UE2 through the DN and SBC-2, the SDP offer sent from the SBC-1 comprising a second set of codecs depending on a phase of the current TC;
receiving, at the UE2, the SDP offer comprising the second set of codecs and selecting a codec;
sending (S15, S25, S35), from the UE2 to the UE1, a SDP answer including the selected codec, through SBC-2, the DN, the BGF-1 and the SBC-1;
checking, at the SBC-1, whether the UE2 selected codec matches with one of the set of codecs of the SDP offer of the UE1, and, in case it matches, forwarding (S36) the SDP answer to the UE1, and in the case the UE2 selected codec does not match with one of the codecs of the SDP offer of the UE1, checking, at the SBC-1 whether the selected codec is supported by the BGF-1, and, in the case it is supported, instructing the BGF-1, by the SBC-1, to perform transcoding from the selected codec into a codec from the first set of codecs of the SDP offer, updating the SDP answer, and forwarding (S16, S26) the updated SDP answer to the UE1, wherein the TC is:
in phase one if LT1 ≤ TC < UT1, where LT1 is a lower threshold and UT1 is a first upper threshold of transcoding capacity,
in phase two if UT1 ≤ TC < UT2, where UT2 is a second upper threshold transcoding capacity,
phase three if UT2 ≤ TC,
wherein LT1, UT1 and UT2 are natural numbers and are configurable parameters.

2. The method of claim 1, wherein in case the current TC is phase one, before forwarding (S14) the SDP offer to the UE2 through the DN and SBC-2, the method further comprises:
offering, at the SBC-1, proactive transcoding with all available codecs supported by SBC-1 and adding all the available codecs, which are not already present in the set of codecs, to the first set of codecs of the SDP offer, obtaining the second set of codecs.

3. The method of claim 1 or 2, wherein in case the current TC is phase two, before forwarding (S24) the SDP offer to the UE2 through the DN and SBC-2, the method further comprises:
offering, at the SBC-1, proactive transcoding only with non-costly available codecs in terms of transcoding capacity, wherein non-costly available codecs are codecs that consume less resources compared to Enhanced Voice Services, EVS, or Opus codecs, supported by SBC-1 and adding all the non-costly available codecs, which are not already present in the set of codecs, to the first set of codecs of the SDP offer, obtaining the second set of codecs.

4. The method of any one of claims 1 to 3, wherein in case the current TC is phase three, the SBC-1 forwards (S34) the SDP offer without offering any proactive transcoding and thus not adding any additional codecs, the second set of codecs thus being identical to the first set of codecs.

5. The method of claim 4, further comprising the steps of:
receiving, at the SBC-2, the SDP offer;
offering, by the SBC-2, proactive transcoding with all available codecs supported by SBC-2 by adding all the available codecs, which are not already present in the set of codecs, to the SDP offer; and
forwarding (S34b) the SDP offer to the UE2.

6. The method of claim 4 or 5, in case the UE2 does not support any of the codecs provided by the SDP offer, the method further comprises the steps of:
rejecting, by the UE2, the SDP offer;
sending a SDP answer, from the UE2 to the UE1, through the SBC-2 and the DN, indicating a third set of supported codecs by the UE2;
if the SBC-1 has any available TC:
updating, by the SBC-1, the SDP offer based on the third set of supported codecs by the UE2;
sending (S46), by the SBC-1, a second SDP offer to the UE2, wherein the second SDP offer comprises at least one of the codecs from the third set of supported codecs by the UE2;
receiving, by the UE2, the second SDP offer and selecting one of the codecs from the second SDP offer;
sending (S47), by the UE2, a second SDP answer to the SBC-1 indicating the selected codec; and
performing transcoding, by the SBC-1, from the UE2 selected codec into one of codecs from the first set of codecs, updating the second SDP answer, and sending (S48) the updated second SDP answer to the UE1.

7. A communication system, the communication system comprising: a first user equipment, UE1, a first Session Border Controller, SBC-1, associated with UE1, a Border Gateway Function BGF-1, a data network, DN, a second user equipment, UE2, and a second Session Border Controller, SBC-2, associated with UE2, wherein the SBC-1 has a transcoding capacity, TC, wherein the TC has a value within one of a plurality of ranges, the method comprising the steps of:
the SBC-1 is configured to subscribe, to the BGF-1, to a transcoding capacity event;
the BGF-1 is configured to notify to the SBC-1 about a current TC;
the UE1 is configured to send to the UE2, a Session Description Protocol, SDP, offer, through SBC-1, comprising a first set of codecs;
the SBC-1 is configured to receive the SDP offer from UE1 and forward it to the UE2 through the DN and the SBC-2, the SDP offer sent from the SBC-1 comprising a second set of codecs depending on a phase of the current TC;
the UE2 is configured to receive the SDP offer comprising the second set of codecs and selecting a codec;
the UE2 is configured to send to the UE1, a SDP answer including the selected codec, through the SBC-2, the DN, the BGF-1 and the SBC-1;
the BGF-1 is configured to check whether the UE2 selected codec matches with one of the set of codecs of the SDP offer of the UE1, and in case the UE2 selected codec matches, the SBC-1 is configured to forward the SDP answer to the UE1, and
in the case the UE2 selected codec does not match, the SBC-1 is configured to check whether the selected codec is supported by the SBC-1, and
in the case it is supported, the SBC-1 is configured to:
instruct the BGF-1 to transcode the SDP answer from the selected codec into a codec from the first set of codecs of the SDP offer, update the SDP answer, and forward the updated SDP answer to the UE1,
wherein the TC is:
in phase one if LT1 ≤ TC < UT1, where LT1 is a lower threshold and UT1 is a first upper threshold of transcoding capacity,
in phase two if UT1 ≤ TC < UT2, where UT2 is a second upper threshold of transcoding capacity,
in phase three if UT2 ≤ TC,
wherein LT1, UT1 and UT2 are natural numbers and are configurable parameters.

8. The communication system of claim 7, wherein in case the current TC is phase one, before the UE1 forwards the SDP offer to the UE2 through the DN and SBC-2, the SBC-1 is further configured to:
offer proactive transcoding with all available codecs supported by SBC-1 by adding all the available codecs, which are not already present in the set of codecs, to the first set of codecs of the SDP offer, obtaining the second set of codecs.

9. The communication system of claim 7 or 8, wherein in case the current TC is phase two, before the UE1 forwards the SDP offer to the UE2 through the DN and SBC-2, the SBC-1 is further configured to:
offer proactive transcoding only with non-costly available codecs in terms of transcoding capacity, wherein non-costly available codecs are codecs that consume less resources compared to Enhanced Voice Services, EVS, or Opus codecs, supported by SBC-1, by adding all the non-costly available codecs, which are not already present in the set of codecs, to the first set of codecs of the SDP offer, obtaining the second set of codecs.

10. The communication system of any one of claims 7 to 9, wherein in case the current TC is phase three, the SBC-1 is configured to forward the SDP offer without offering any proactive transcoding nor adding any additional codecs, the second set of codecs thus being identical to the first set of codecs.

11. The communication system of claim 10, wherein the SBC-2 is configured to:
receive the SDP offer;
offer proactive transcoding with all available codecs supported by SBC-2 by adding all the available codecs, which are not already present in the set of codecs, to the SDP offer; and
forward the SDP offer to the UE2.

12. The communication system of claim 10 or 11, , in case the UE2 does not support any of the codecs provided by the SDP offer:
the UE2 is configured to reject the SDP offer;
the UE2 is configured to send a SDP answer to the UE1, through the SBC-2 and the DN, indicating a third set of supported codecs by the UE2;
if the SBC-1 has any available TC:
the SBC-1 is configured to update the SDP offer based on the third set of supported codecs by the UE2;
the SBC-1 is configured a second SDP offer to the UE2, wherein the second SDP offer comprises at least one of the codecs from the third set of supported codecs by the UE2;
the UE2 is configured to receive the second SDP offer and to select one of the codecs from the second SDP offer;
the UE2 is configured to send a second SDP answer to the SBC-1 indicating the selected codec; and
the SBC-1 is configured to: perform transcoding from the UE2 selected codec into one of codecs from the first set of codecs, update the second SDP answer, and forward the updated second SDP answer to the UE1.

## Patentansprüche

1. Verfahren zum Transcodieren in einem Kommunikationssystem, wobei das Kommunikationssystem aufweist: eine erste Benutzereinrichtung, UE1, eine erste Sitzungsgrenzsteuerung, SBC-1, die mit der UE1 verknüpft ist, eine Grenz-Gateway-Funktion, BGF-1, ein Datennetzwerk, DN, eine zweite Benutzereinrichtung, UE2, und eine zweite Sitzungsgrenzsteuerung, SBC-2, die mit der UE2 verknüpft ist, wobei die SBC-1 eine Transcodierungskapazität, TC, aufweist, wobei die TC einen Wert innerhalb eines von mehreren Bereichen aufweist, wobei das Verfahren die Schritte aufweist:
Abonnieren (S11) eines Transcodierungskapazitätsereignisses von der SBC-1 zur BGF-1;
Benachrichtigen (S12, S22, S32) von der BGF-1 an die SBC-1 über eine gegenwärtige TC;
Senden (S13, S23, S33) eines Sitzungsbeschreibungsprotokoll-, SDP-,Angebots von der UE1 an die UE2 durch die SBC-1, das einen ersten Satz von Codecs aufweist;
Empfangen des SDP-Angebots an der SBC-1 und Senden (S14, S24, S25) des SDP-Angebots an die UE2 durch das DN und die SBC-2, wobei das von der SBC-1 gesendete SDP-Angebot einen zweiten Satz von Codecs aufweist, der von einer Phase der gegenwärtigen TC abhängt;
Empfangen des SDP-Angebots, das den zweiten Satz der Codecs aufweist, an der UE2 und Auswählen eines Codecs;
Senden (S15, S25, S35) einer SDP-Antwort, die den ausgewählten Codec enthält, von der UE2 an die UE1 durch die SBC-2, das DN, die BGF-1 und die SBC-1;
Prüfen in der SBC-1, ob der von der UE2 ausgewählte Codec mit einem des Satzes der Codecs des SDP-Angebots des UE1 übereinstimmt, und, falls er übereinstimmt, Weiterleiten (S36) der SDP-Antwort an die UE1, und
falls der von der UE2 ausgewählte Codec nicht mit einem der Codecs des SDP-Angebots der UE1 übereinstimmt, Prüfen an der SBC-1, ob der ausgewählte Codec von der BGF-1 unterstützt wird, und falls er unterstützt wird,
Anweisen der BGF-1 durch die SBC-1, eine Transcodierung vom ausgewählten Codec in einen Codec aus dem ersten Satz der Codecs des SDP-Angebots durchzuführen, Aktualisieren der SDP-Antwort und Weiterleiten (S16, S26) der aktualisierten SDP-Antwort an die UE1, wobei die TC ist:
in Phase eins, wenn LT1 ≤ TC < UT1 ist, wobei LT1 ein unterer Schwellenwert und UT1 ein erster oberer Schwellenwert der Transcodierungskapazität ist,
in Phase zwei, wenn UT1 ≤ TC < UT2, wobei UT2 ein zweiter oberer Schwellenwert der Transcodierungskapazität ist,
in Phase drei, wenn UT2 ≤ TC,
wobei LT1, UT1 und UT2 natürliche Zahlen und konfigurierbare Parameter sind.

2. Verfahren nach Anspruch 1, wobei falls die gegenwärtige TC die Phase eins ist, das Verfahren vor der Weiterleitung (S14) des SDP-Angebots an die UE2 durch das DN und die SBC-2 ferner aufweist:
Anbieten an der SBC-1 einer proaktiven Transcodierung mit allen verfügbaren Codecs, die von der SBC-1 unterstützt werden, und Hinzufügen aller verfügbaren Codecs, die nicht bereits im Satz der Codecs vorhanden sind, zum ersten Satz der Codecs des SDP-Angebots, wobei der zweite Satz der Codecs erhalten wird.

3. Verfahren nach Anspruch 1 oder 2, wobei das Verfahren, falls die gegenwärtige TC die Phase zwei ist, vor dem Weiterleiten (S24) des SDP-Angebots an die UE2 durch den DN und SBC-2 ferner aufweist
Anbieten an der SBC-1 einer proaktiven Transcodierung nur mit nicht kostspielig verfügbaren Codecs in Bezug auf die Transcodierungskapazität, wobei nicht kostspielig verfügbare Codecs Codecs sind, die weniger Ressourcen im Vergleich zu Enhanced Voice Services, EVS, oder Opus-Codecs verbrauchen, die von SBC-1 unterstützt werden, und Hinzufügen aller nicht kostspielig verfügbaren Codecs, die nicht bereits im Satz der Codecs vorhanden sind, zum ersten Satz der Codecs des SDP-Angebots, wobei der zweite Satz der Codecs erhalten wird.

4. Verfahren nach einem der Ansprüche 1 bis 3, wobei falls die gegenwärtige TC die Phase drei ist, die SBC-1 das SDP-Angebot weiterleitet (S34), ohne irgendeine proaktive Transkodierung anzubieten und folglich keine zusätzlichen Codecs hinzuzufügen, wobei der zweite Satz der Codecs folglich identisch mit dem ersten Satz der Codecs ist.

5. Verfahren nach Anspruch 4, das ferner die Schritte aufweist:
Empfangen des SDP-Angebots an der SBC-2;
Anbieten durch die SBC-2 einer proaktiven Transcodierung mit allen verfügbaren Codecs, die von der SBC-2 unterstützt werden, indem alle verfügbaren Codecs, die nicht bereits im Satz der Codecs vorhanden sind, zum SDP-Angebot hinzugefügt werden; und
Weiterleiten (S34b) des SDP-Angebots an die UE2.

6. Verfahren nach Anspruch 4 oder 5, wobei, falls die UE2 keinen der durch das SDP-Angebot bereitgestellten Codecs unterstützt, das Verfahren ferner die Schritte aufweist:
Zurückweisen des SDP-Angebots durch die UE2;
Senden einer SDP-Antwort von der UE2 an die UE1 durch die SBC-2 und das DN, die einen dritten Satz der durch die UE2 unterstützten Codecs angibt;
wenn die SBC-1 irgendeine verfügbare TC aufweist:
Aktualisieren des SDP-Angebots durch die SBC-1 basierend auf dem dritten Satz der durch die UE2 unterstützten Codecs;
Senden (S46), durch die SBC-1, eines zweiten SDP-Angebots an die UE2, wobei das zweite SDP-Angebot mindestens einen der Codecs aus dem dritten Satz der durch die UE2 unterstützten Codecs aufweist;
Empfangen des zweiten SDP-Angebots durch die UE2 und Auswählen eines der Codecs aus dem zweiten SDP-Angebot;
Senden (S47) durch die UE2 einer zweiten SDP-Antwort an die SBC-1, die den ausgewählten Codec anzeigt; und
Durchführen einer Transcodierung durch die SBC-1 von dem von der UE2 ausgewählten Codec in einen der Codecs aus dem ersten Satz der Codecs, Aktualisieren der zweiten SDP-Antwort und Senden (S48) der aktualisierten zweiten SDP-Antwort an die UE1.

7. Kommunikationssystem, wobei das Kommunikationssystem aufweist: eine erste Benutzereinrichtung, UE1, eine erste Sitzungsgrenzsteuerung, SBC-1, die mit der UE1 verknüpft ist, eine Grenz-Gateway-Funktion, BGF-1, ein Datennetzwerk, DN, eine zweite Benutzereinrichtung, UE2, und eine zweite Sitzungsgrenzsteuerung, SBC-2, die mit der UE2 verknüpft ist, wobei die SBC-1 eine Transcodierungskapazität, TC, aufweist, wobei die TC einen Wert innerhalb eines von mehreren Bereichen aufweist, wobei das Verfahren die Schritte aufweist:
die SBC-1 konfiguriert ist, bei der BGF-1 ein Transcodierungskapazitätsereignis zu abonnieren;
die BGF-1 konfiguriert ist, die SBC-1 über eine gegenwärtige TC zu benachrichtigen;
die UE1 konfiguriert ist, an die UE2 ein Sitzungsbeschreibungsprotokoll-, SDP-Angebot durch die SBC-1 zu senden, das einen ersten Satz von Codecs aufweist;
die SBC-1 konfiguriert ist, das SDP-Angebot von der UE1 zu empfangen und es über das DN und die SBC-2 an die UE2 weiterzuleiten, wobei das vom SBC-1 gesendete SDP-Angebot einen zweiten Satz von Codecs aufweist, der von einer Phase der gegenwärtigen TC abhängt;
die UE2 konfiguriert ist, das SDP-Angebot, das die zweite Gruppe von Codecs aufweist,
zu empfangen und einen Codec auszuwählen;
die UE2 konfiguriert ist, an die UE1 eine SDP-Antwort, die den ausgewählten Codec enthält, durch die SBC-2, das DN, die BGF-1 und die SBC-1 zu senden;
die BGF-1 konfiguriert ist, zu prüfen, ob der von der UE2 ausgewählte Codec mit einem des Satzes der Codecs des SDP-Angebots der UE1 übereinstimmt, und
falls der vom UE2 ausgewählte Codec übereinstimmt, die SBC-1 konfiguriert ist, die SDP-Antwort an die UE1 weiterzuleiten, und
falls der von der UE2 ausgewählte Codec nicht übereinstimmt, die SBC-1 konfiguriert ist, zu prüfen, ob der ausgewählte Codec von der SBC-1 unterstützt wird, und
falls er unterstützt wird, die SBC-1 konfiguriert ist:
die BGF-1 anzuweisen, die SDP-Antwort vom ausgewählten Codec in einen Codec aus dem ersten Satz der Codecs des SDP-Angebots zu transcodieren, die SDP-Antwort zu aktualisieren und die aktualisierte SDP-Antwort an die UE1 weiterzuleiten,
wobei die TC ist:
in Phase eins, wenn LT1 ≤ TC < UT1, wobei LT1 ein unterer Schwellenwert und UT1 ein erster oberer Schwellenwert der Transcodierungskapazität ist,
in Phase zwei, wenn UT1 ≤ TC < UT2, wobei UT2 ein zweiter oberer Schwellenwert der Transcodierungskapazität ist,
in Phase drei, wenn UT2 ≤ TC,
wobei LT1, UT1 und UT2 natürliche Zahlen und konfigurierbare Parameter sind.

8. Kommunikationssystem nach Anspruch 7, wobei falls die gegenwärtige TC die Phase eins ist, bevor die UE1 das SDP-Angebot über das DN und die SBC-2 an die UE2 weiterleitet, die SBC-1 ferner konfiguriert ist:
proaktives Transcodieren mit allen verfügbaren Codecs anzubieten, die von der SBC-1 unterstützt werden, indem alle verfügbaren Codecs, die nicht bereits in dem Satz der Codecs vorhanden sind, zum ersten Satz der Codecs des SDP-Angebots hinzugefügt werden, wodurch der zweite Satz der Codecs erhalten wird.

9. Kommunikationssystem nach Anspruch 7 oder 8, wobei falls die gegenwärtige TC die Phase zwei ist, bevor die UE1 das SDP-Angebot über das DN und die SBC-2 an die UE2 weiterleitet, die SBC-1 ferner konfiguriert ist:
proaktives Transcodieren nur mit nicht kostspielig verfügbaren Codecs in Bezug auf die Transcodierungskapazität anzubieten, wobei nicht kostspielig verfügbare Codecs Codecs sind, die weniger Ressourcen im Vergleich zu Enhanced Voice Services, EVS, oder
Opus-Codecs verbrauchen, die von SBC-1 unterstützt werden, indem alle nicht kostspielig verfügbaren Codecs, die nicht bereits im Satz der Codecs vorhanden sind, zum ersten Satz der Codecs des SDP-Angebots hinzugefügt werden, wodurch der zweite Satz der Codecs erhalten wird.

10. Kommunikationssystem nach einem der Ansprüche 7 bis 9, wobei falls die gegenwärtige TC die Phase drei ist, die SBC-1 konfiguriert ist, das SDP-Angebot weiterzuleiten, ohne eine proaktive Transkodierung anzubieten oder zusätzliche Codecs hinzuzufügen, wobei der zweite Satz der Codecs folglich identisch mit dem ersten Satz der Codecs ist.

11. Kommunikationssystem nach Anspruch 10, wobei die SBC-2 konfiguriert ist:
das SDP-Angebot zu empfangen;
proaktives Transcodieren mit allen verfügbaren Codecs anzubieten, die von der SBC-2 unterstützt werden, indem alle verfügbaren Codecs, die nicht bereits in dem Satz der Codecs vorhanden sind, zum SDP-Angebot hinzugefügt werden; und
das SDP-Angebot an die UE2 weiterzuleiten.

12. Kommunikationssystem nach Anspruch 10 oder 11, falls die UE2 keinen der Codecs unterstützt, die durch das SDP-Angebot bereitgestellt werden:
die UE2 konfiguriert ist, das SDP-Angebot abzulehnen;
die UE2 konfiguriert ist, über die SBC-2 und die DN eine SDP-Antwort an die UE1 zu senden, die einen dritten Satz der durch die UE2 unterstützten Codecs angibt;
wenn die SBC-1 irgendeine verfügbare TC aufweist:
die SBC-1 konfiguriert ist, das SDP-Angebot auf der Grundlage des dritten Satzes von unterstützten Codecs durch die UE2 zu aktualisieren;
die SBC-1 konfiguriert ist, dem UE2 ein zweites SDP-Angebot zu senden, wobei das zweite SDP-Angebot mindestens einen der Codecs aus dem dritten Satz der durch die UE2 unterstützten Codecs aufweist;
die UE2 konfiguriert ist, das zweite SDP-Angebot zu empfangen und einen der Codecs aus dem zweiten SDP-Angebot auszuwählen;
die UE2 konfiguriert ist, eine zweite SDP-Antwort an den SBC-1 zu senden, die den ausgewählten Codec angibt; und
die SBC-1 konfiguriert ist, eine Transcodierung von dem von der UE2 ausgewählten Codec in einen der Codecs aus dem ersten Satz der Codecs durchzuführen, die zweite SDP-Antwort zu aktualisieren und die aktualisierte zweite SDP-Antwort an die UE1 weiterzuleiten.

## Revendications

1. Procédé de transcodage dans un système de communication, ledit système de communication comprenant : un premier équipement utilisateur UE1, un premier contrôleur de frontière de session SBC-1, associé à UE1, une fonction de passerelle frontière BGF-1, un réseau de données DN, un deuxième équipement utilisateur UE2, et un deuxième contrôleur de frontière de session SBC-2, associé à UE2, où le SBC-1 a une capacité de transcodage TC, ladite TC ayant une valeur comprise dans l'une d'une pluralité de plages, ledit procédé comprenant les étapes :
d'abonnement (S11), du SBC-1 à la BGF-1, à un événement de capacité de transcodage ;
de notification (S12, S22, S32), de la BGF-1 au SBC-1, relative à une TC actuelle ;
d'envoi (S13, S23, S33), de l'UE1 vers l'UE2, d'une offre de protocole de description de session SDP, via SBC-1, comprenant un premier ensemble de codecs ;
de réception de l'offre SDP, au niveau du SBC-1, et d'envoi (S14, S24, S25) de l'offre SDP à l'UE2 via le DN et SBC-2, l'offre SDP adressée par le SBC-1 comprenant un deuxième ensemble de codecs dépendant d'une phase de la TC actuelle ;
de réception, au niveau de l'UE2, de l'offre SDP comprenant le deuxième ensemble de codecs et de sélection d'un codec ;
d'envoi (S15, S25, S35), de l'UE2 à l'UE1, d'une réponse SDP comprenant le codec sélectionné, via SBC-2, le DN, la BGF-1 et le SBC-1 ;
de contrôle, au niveau du SBC-1, si le codec sélectionné par l'UE2 correspond avec un codec de l'ensemble de codecs de l'offre SDP de l'UE1, et, en cas de correspondance, de transmission (S36) de la réponse SDP à l'UE1, et
en cas de non-correspondance du codec sélectionné par l'UE2 avec un des codecs de l'offre SDP de l'UE1, de contrôle, au niveau du SBC-1, si le codec sélectionné est assisté par la BGF-1, et, en cas d'assistance,
de commande de la BGF-1, par le SBC-1, afin d'effectuer un transcodage du codec sélectionné vers un codec du premier ensemble de codecs de l'offre SDP, de mise à jour de la réponse SDP, et de transmission (S16, S26) de la réponse mise à jour SDP à l'UE1, où la TC est :
en phase un, si LT1 ≤ TC < UT1, LT1 étant un seuil inférieur et UT1 un premier seuil supérieur de capacité de transcodage,
en phase deux, si UT1 ≤ TC < UT2, UT2 étant un deuxième seuil supérieur de capacité de transcodage,
en phase trois si UT2 ≤ TC,
LT1, UT1 et UT2 étant des nombres naturels et des paramètres configurables.

2. Procédé selon la revendication 1, où, dans le cas où la TC actuelle est en phase un, avant transmission (S14) de l'offre SDP à l'UE2 via le DN et SBC-2, ledit procédé comprend en outre :
l'offre, au niveau du SBC-1, d'un transcodage proactif avec tous les codecs disponibles assistés par SBC-1 et l'ajout de tous les codecs disponibles, qui ne sont pas déjà présents dans l'ensemble de codecs, au premier ensemble de codecs de l'offre SDP, obtenant le deuxième ensemble de codecs.

3. Procédé selon la revendication 1 ou la revendication 2, où, dans le cas où la TC actuelle est en phase deux, avant transmission (S24) de l'offre SDP à l'UE2 via le DN et SBC-2, ledit procédé comprend en outre :
l'offre, au niveau du SBC-1, d'un transcodage proactif seulement avec des codecs non onéreux disponibles en termes de capacité de transcodage, où les codecs non onéreux disponibles sont des codecs consommant moins de ressources en comparaison de services vocaux évolués EVS, ou des codecs Opus, assistés par SBC-1 et l'ajout de tous les codecs non onéreux disponibles, qui ne sont pas déjà présents dans l'ensemble de codecs, au premier ensemble de codecs de l'offre SDP, obtenant le deuxième ensemble de codecs.

4. Procédé selon l'une des revendications 1 à 3, où, dans le cas où la TC actuelle est en phase trois, le SBC-1 transmet (S34) l'offre SDP sans offre d'un transcodage proactif quelconque et en n'ajoutant donc aucun codec additionnel, le deuxième ensemble de codecs étant ainsi identique au premier ensemble de codecs.

5. Procédé selon la revendication 4, comprenant en outre les étapes :
de réception, au niveau du SBC-2, de l'offre SDP ;
d'offre, par le SBC-2, d'un transcodage proactif avec tous les codecs disponibles assistés par SBC-2 en ajoutant à l'offre SDP tous les codecs disponibles, qui ne sont pas déjà présents dans l'ensemble de codecs ; et
de transmission (S34b) de l'offre SDP à l'UE2.

6. Procédé selon la revendication 4 ou la revendication 5, où, dans le cas où l'UE2 n'assiste aucun des codecs fournis par l'offre SDP, ledit procédé comprend en outre les étapes :
de rejet, par l'UE2, de l'offre SDP ;
d'envoi d'une réponse SDP, de l'UE2 à l'UE1, via le SBC-2 et le DN, indiquant un troisième ensemble de codecs assistés par l'UE2 ;
si le SBC-1 a une TC disponible :
de mise à jour, par le SBC-1, de l'offre SDP sur la base du troisième ensemble de codecs assistés par l'UE2 ;
d'envoi (S46), par le SBC-1, d'une deuxième offre SDP à l'UE2, ladite deuxième offre SDP comprenant au moins un des codecs du troisième ensemble de codecs assistés par l'UE2 ;
de réception, par l'UE2, de la deuxième offre SDP et de sélection d'un des codecs de la deuxième offre SDP ;
d'envoi (S47), par l'UE2, d'une deuxième réponse SDP au SBC-1 indiquant le codec sélectionné ; et
d'exécution d'un transcodage, par le SBC-1, du codec sélectionné par l'UE2 en un des codecs du premier ensemble de codecs, de mise à jour de la deuxième réponse SDP, et d'envoi (S48) de la deuxième réponse SDP mise à jour à l'UE1.

7. Système de communication, ledit système de communication comprenant : un premier équipement utilisateur UE1, un premier contrôleur de frontière de session SBC-1, associé à UE1, une fonction de passerelle frontière BGF-1, un réseau de données, DN, un deuxième équipement utilisateur UE2, et un deuxième contrôleur de frontière de session SBC-2, associé à UE2, où le SBC-1 a une capacité de transcodage TC, la TC ayant une valeur comprise dans l'une d'une pluralité de plages, ledit procédé comprenant les étapes suivantes :
le SBC-1 est prévu pour s'abonner, à la BGF-1, à un événement de capacité de transcodage ;
la BGF-1 est prévue pour notifier au SBC-1 une TC actuelle ;
l'UE1 est prévu pour envoyer à l'UE2 une offre de protocole de description de session SDP, via SBC-1, comprenant un premier ensemble de codecs ;
le SBC-1 est prévu pour recevoir l'offre SDP de l'UE1 et la transmettre à l'UE2 via le DN et le SBC-2, l'offre SDP adressée par le SBC-1 comprenant un deuxième ensemble de codecs dépendant d'une phase de TC actuelle ;
l'UE2 est prévu pour recevoir l'offre SDP comprenant le deuxième ensemble de codecs et sélectionner un codec ;
l'UE2 est prévu pour envoyer à l'UE1 une réponse SDP comprenant le codec sélectionné,
via le SBC-2, le DN, la BGF-1 et le SBC-1 ;
la BGF-1 est prévue pour contrôler si le codec sélectionné par l'UE2 correspond à un codec de l'ensemble de codecs de l'offre SDP de l'UE1, et
en cas de correspondance du codec sélectionné par l'UE2, le SBC-1 est prévu pour transmettre la réponse SDP à l'UE1, et
en cas de non-correspondance du codec sélectionné par l'UE2, le SBC-1 est prévu pour contrôler si le codec sélectionné est assisté par le SBC-1, et
en cas d'assistance, le SBC-1 est prévu pour :
commander à la BGF-1 de transcoder la réponse SDP à partir du codec sélectionné en un codec du premier ensemble de codecs de l'offre SDP, mettre à jour la réponse SDP, et
transmettre la réponse mise à jour SDP à l'UE1,
où la TC est :
en phase un, si LT1 ≤ TC < UT1, LT1 étant un seuil inférieur et UT1 un premier seuil supérieur de capacité de transcodage,
en phase deux, si UT1 ≤ TC < UT2, UT2 étant un deuxième seuil supérieur de capacité de transcodage,
en phase trois, si UT2 ≤ TC,
où LT1, UT1 et UT2 sont des nombres naturels et des paramètres configurables.

8. Système de communication selon la revendication 7, où, dans le cas où la TC actuelle est en phase un, avant transmission par l'UE1 de l'offre SDP à l'UE2 via le DN et SBC-2, le SBC-1 est en outre prévu pour :
offrir un transcodage proactif avec tous les codecs disponibles assistés par SBC-1 en ajoutant tous les codecs disponibles, qui ne sont pas déjà présents dans l'ensemble de codecs, au premier ensemble de codecs de l'offre SDP, obtenant le deuxième ensemble de codecs.

9. Système de communication selon la revendication 7 ou la revendication 8, où dans le cas où la TC actuelle est en phase deux, avant transmission par l'UE1 de l'offre SDP à l'UE2 via le DN et SBC-2, le SBC-1 est en outre prévu pour :
offrir un transcodage proactif seulement avec des codecs non onéreux disponibles en termes de capacité de transcodage, où les codecs non onéreux disponibles sont des codecs consommant moins de ressources en comparaison de services vocaux évolués EVS, ou
des codecs Opus, assistés par SBC-1, en ajoutant tous les codecs non onéreux disponibles, qui ne sont pas déjà présents dans l'ensemble de codecs, au premier ensemble de codecs de l'offre SDP, obtenant le deuxième ensemble de codecs.

10. Système de communication selon l'une des revendications 7 à 9, où, dans le cas où la TC actuelle est en phase trois, le SBC-1 est prévu pour transmettre l'offre SDP sans offre d'un transcodage proactif quelconque ni ajout d'aucun codec additionnel, le deuxième ensemble de codecs étant ainsi identique au premier ensemble de codecs.

11. Système de communication selon la revendication 10, où le SBC-2 est prévu pour :
recevoir l'offre SDP ;
offrir un transcodage proactif avec tous les codecs disponibles assistés par SBC-2 en ajoutant tous les codecs disponibles, qui ne sont pas déjà présents dans l'ensemble de codecs, à l'offre SDP ; et
transmettre l'offre SDP à l'UE2.

12. Système de communication selon la revendication 10 ou la revendication 11, dans le cas où l'UE2 n'assiste aucun des codecs fournis par l'offre SDP :
l'UE2 est prévu pour rejeter l'offre SDP ;
l'UE2 est prévu pour envoyer une réponse SDP à l'UE1, via le SBC-2 et le DN, indiquant un troisième ensemble de codecs assistés par l'UE2 ;
si le SBC-1 a une TC disponible :
le SBC-1 est prévu pour mettre à jour l'offre SDP sur la base du troisième ensemble de codecs assistés par l'UE2 ;
le SBC-1 est prévu pour envoyer une deuxième offre SDP à l'UE2, ladite deuxième offre SDP comprenant au moins un des codecs du troisième ensemble de codecs assistés par l'UE2 ;
l'UE2 est prévu pour recevoir la deuxième offre SDP et pour sélectionner un des codecs de la deuxième offre SDP ;
l'UE2 est prévu pour envoyer une deuxième réponse SDP au SBC-1 indiquant le codec sélectionné ; et
le SBC-1 est prévu pour : exécuter un transcodage du codec sélectionné par l'UE2 en un des codecs du premier ensemble de codecs, mettre à jour la deuxième réponse SDP, et transmettre la deuxième réponse SDP mise à jour à l'UE1.
